# EUROPEAN PATENT SPECIFICATION

(11) **EP 3 511 235 B1**
(45) Date of publication and mention of the grant of the patent: **14.04.2021**
(21) Application number: 17848617.1
(22) Date of filing: 29.08.2017
(51) Int. Cl.: B62J 43/20, B62J 35/00, B62K 11/04, B62M 7/02

(54) **BATTERY CASE FOR SADDLED VEHICLES**
BATTERIEGEHÄUSE FÜR SATTELFAHRZEUG
BOÎTIER DE BATTERIE DESTINÉ À DES VÉHICULES À SELLE

(30) Priority: 09.09.2016 JP 2016176512
(43) Date of publication of application: 17.07.2019
(73) Proprietor: Honda Motor Co., Ltd., Tokyo 107-8556 (JP)
(72) Inventor: YAOKAWA, Tetsuo, Wako-shi Saitama 351-0193 (JP); SATO, Tomoyasu, Wako-shi Saitama 351-0193 (JP)
(74) Representative: Beder, Jens
(86) International application number: PCT/JP2017/030967
(87) International publication number: WO 2018/047677

(56) References cited:
- WO-A1-2013/061386
- JP-A- S5 682 677
- JP-A- H03 109 184
- JP-A- 2004 098 860
- JP-A- 2005 289 236
- JP-A- 2005 289 236
- JP-A- 2006 088 892
- JP-A- 2010 076 538
- JP-A- 2010 232 084
- JP-A- 2015 042 511
- US-A1- 2014 035 269

## Description

### TECHNICAL FIELD

The present invention relates to a saddled vehicle, and especially relates to a saddled vehicle having a battery case with a battery supported between a pair of right and left vehicle body frames.

### BACKGROUND ART

Recently, a battery case has been known that is configured to support an on-vehicle battery for a saddled vehicle to a vehicle body frame or the like.

Patent Literature 1 discloses such a structure that in a motorcycle including a pair of right and left frame pipes extending rearward and downward from a head pipe, a battery case is mounted to stride over right and left angular frame pipes in a vehicle width direction from a lower portion of a vehicle body, and a battery is stored from above in a recessed portion formed in the battery case, so that the battery is supported between the right and left frame pipes.

### CITATION LIST

### PATENT LITERATURE

PATENT LITERATURE 1: Japanese Patent Application Laid-Open No. 2000-38177

### SUMMARY OF INVENTION

### TECHNICAL PROBLEM

The motorcycle described in Patent Literature 1 has a structure that a fuel tank is dispose below a seat on which a rider sits. For this reason, upper sides of the pair of right and left frame pipes are covered with a cover member only, and an oil tank is also disposed behind the battery.

However, in the general motorcycle with the fuel tank disposed between a steering handlebar and the seat, electric components such as an ECU and an ignition coil may be disposed between the right and left frame pipes. As a result, when the battery is disposed, there was a problem that in the light of the degree of freedom in layout, such a layout that the battery case is dispose between the right and left frame pipes is less likely to be realized.

A saddled vehicle, in which all features of the preamble of claim 1 are disclosed, is described in JP 2005 289236 A.

An object of the present invention is to provide a saddled vehicle having a battery case, which is configured to effectively utilize a space between a right and left vehicle body frames.

### SOLUTION TO PROBLEMS

This object is achieved by a saddled vehicle according to the enclosed independent claim 1. Advantageous features of the present invention are defined in the corresponding subclaims.

### ADVANTAGEOUS EFFECTS OF INVENTION

According to a first feature of the present invention, the battery case (70) is positioned between the head pipe (9) and the fuel tank (3), and the fuel tank (3) and the battery case (70) are disposed to partially overlap with each other in a side view of a vehicle body, and a rear portion of the battery case (70) is stored in a recessed portion (3b) formed in a front portion of the fuel tank (3) in the center in a vehicle width direction. Therefore, the battery case can be disposed between the head pipe and the fuel tank while suppressing a reduction in capacity of the fuel tank to a minimum. Herewith, the battery case can be disposed nearer the front side of the vehicle body without extending a distance from the head pipe to the rear end of the fuel tank, and a load ratio of the front wheel can be increased. Further, by devising the shape of the fuel tank, the longitudinal dimension can be shortened while ensuring the capacity of the fuel tank, and also the right and left of the battery case in the vehicle width direction can be protected by the fuel tank.

Further, the saddled vehicle (1) is provided with a tank cover (4) for covering from above the whole of the fuel tank (3) and the battery case (70), a maintenance lid (4a) formed with a through hole (4b) for exposing a fuel filler cap (3a) of the fuel tank (3) to an upper side of the vehicle body is detachably provided to the tank cover (4), and the battery case (70) is disposed below the maintenance lid (4a). Therefore, access to the battery case can be achieved by removing the maintenance lid positioned in front of the tank cover, and the maintainability of the battery or the like stored in the battery case can be improved.

According to a second feature of the present invention, the battery case (70) has a case portion (72) for storing the battery (B), and a cover portion (71) for covering an upper opening of the case portion (72), and the case portion (72) and the cover portion (71) partially overlap with each other in the side view of the vehicle body. Therefore, the upper opening of the case portion can be covered with the cover portion so as to partially overlap with each other, the battery can be protected from water or the like. Also, access to the battery can be achieved by removing the cover from the upper portion of the battery case, and maintainability can be improved.

According to a third feature of the present invention, the main frames (2a) are formed into a shape extending rearward and downward from the head pipe (9) while spreading outward in the vehicle width direction, and subsequently extending rearward while a lateral interval is narrowed, and the battery case (70) is formed into an approximately trapezoid in a plan view of the vehicle body in order to be stored in a range from a rear portion of the head pipe (9) to a portion with the lateral interval of the main frames (2a) maximized. Therefore, the shape of the battery case can be optimized, large capacity can be ensured while suppressing the dimension in the longitudinal direction of the vehicle body. Also, the position of the center of gravity of the vehicle body can be set nearer the front side while suppressing the dead space behind the head pipe to the minimum.

### BRIEF DESCRIPTION OF DRAWINGS

Fig. 1 is a left side view of a motorcycle applied with a battery case for saddled vehicles according to the prevent embodiment.
Fig. 2 is a perspective view of the motorcycle with exterior components removed.
Fig. 3 is an enlarged perspective view showing a configuration of the battery case according to the present embodiment.
Fig. 4 is a plan view of the motorcycle.
Fig. 5 is a plan view of the motorcycle with the tank cover removed.
Fig. 6 is a cross-sectional view taken along line VI-VI in Fig. 4.
Fig. 7 is a partially enlarged view of Fig. 6.
Fig. 8 is a cross-sectional view taken along line VIII-VIII in Fig. 7.
Fig. 9 is a cross-sectional view taken along line IX-IX in Fig. 6.

### DESCRIPTION OF EMBODIMENT

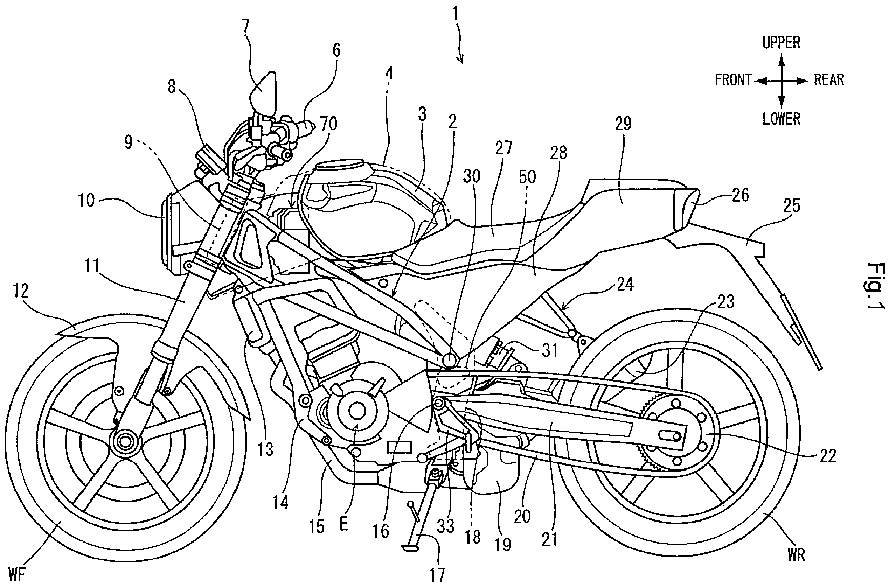

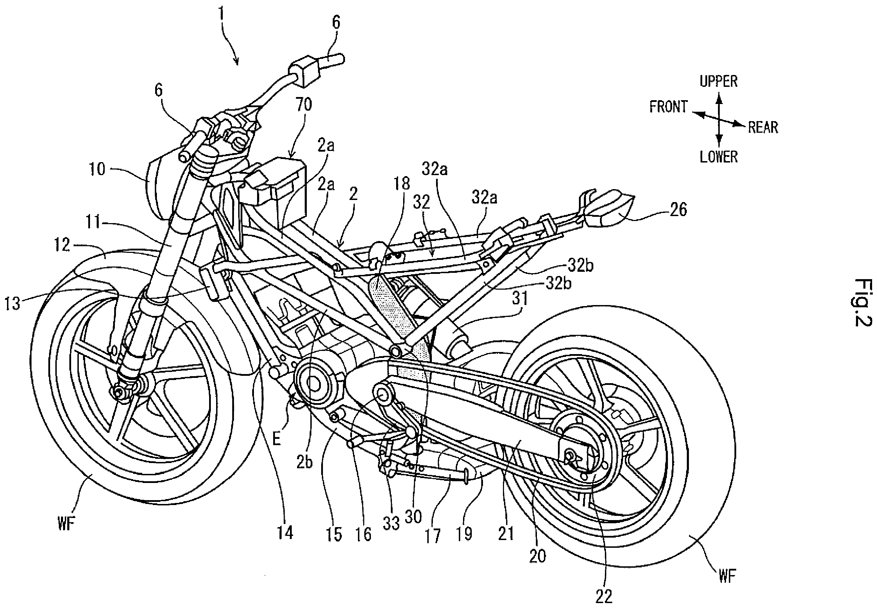

A preferable embodiment of the present invention will be described below with reference to the drawings. Fig. 1 is a left side view of a motorcycle 1 applied with a battery case 70 for saddled vehicles according to the prevent embodiment. Fig. 2 is a perspective view of the motorcycle 1 with exterior components removed.

A vehicle body frame 2 of the motorcycle 1 as a saddled vehicle has a pair of right and left upper main frames 2a extending rearward and downward from a position nearer an upper portion of a head pipe 9, and a pair of right and left lower main frames 2b extending rearward and downward from a position nearer a lower portion of the head pipe 9. Rear ends of the upper main frames 2a and the lower main frames 2b made of steel pipes are respectively connected to a connector pipe 30 extending in a vehicle width direction.

Pivot plates 18 as a pair of right and left plates made of plate steel members are fixed to an inner side in the vehicle width direction of a connection between the upper and lower main frames 2a, 2b and the connector pipe 30. The pivot plates 18 support a pivot 16 extending in the vehicle width direction in a position below the connector pipe 30, and a front end of a swing arm 21 rotatably supporting a rear wheel WR is journaled to the pivot 16. An upper end of a rear cushion unit 31 for suspending the swing arm 21 with respect to a side of the vehicle body is journaled to a position nearer upper portions of the pivot plates 18. Step holders 33 for retaining foot placing steps for a rider are attached to a position outward in the vehicle width direction of the pivot 16. A side stand 17 is attached below the step holder 33 on a left side in the vehicle width direction.

The head pipe 9 steerably supports a pair of right and left front forks 11 rotatably supporting a front wheel WF. A pair of right and left rear view mirrors 7 is attached to a steering handlebar 6 fixed to upper portions of the front forks 11, and a meter device 8 and a headlight 10 are supported in front of the front forks 11.

An engine E is supported by the lower main frames 2b and the pivot plates 18, and rotational driving force of the engine E is transmitted through a drive chain 20 to a driven sprocket 22 rotating integrally with the rear wheel WR. An exhaust pipe 15 of the engine E is connected to a muffler 23 on a right side in the vehicle width direction through an expansion chamber 19 disposed behind and below the pivot 16. A radiator 13 dissipating heat of cooling water for the engine E is disposed in a position above and in front of the engine E and below the head pipe 9.

A cooling water reservoir tank 50 for the radiator 13 is disposed in a position between the right and left pivot plates 18 and between the connector pipe 30 and the pivot 16 in a vertical direction of the vehicle body.

A metal fuel tank 3 covered with a tank cover 4 made of synthetic resin or the like is disposed in a position behind the head pipe 9 and above the upper main frames 2a. A synthetic resin battery case 70 storing an on-vehicle battery or the like is disposed in a position between the head pipe 9 and the fuel tank 3 and covered with the tank cover 4 from above.

A pair of right and left side covers 28 is provided below a seat 27 located adjacently to a rear portion of the fuel tank 3, and a pair of right and left tandem step holders 24 extends from positions of rear lower surfaces of the side covers 28. A tail lamp 26 as a taillight device is disposed at a rear end of a rear cowl 29 disposed to a rear portion of the seat 27, and a rear fender 25 extends from a lower surface of the rear cowl 29 toward a rear side.

The seat 27, tail lamp 26, and the like are supported by a pair of right and left upper rear frames 32a connected to the upper main frames 2a and a pair of right and left lower rear frames 32b connected to the connector pipe 30. The tandem step holders 24 are fixed to lower surfaces of the lower rear frames 32b.

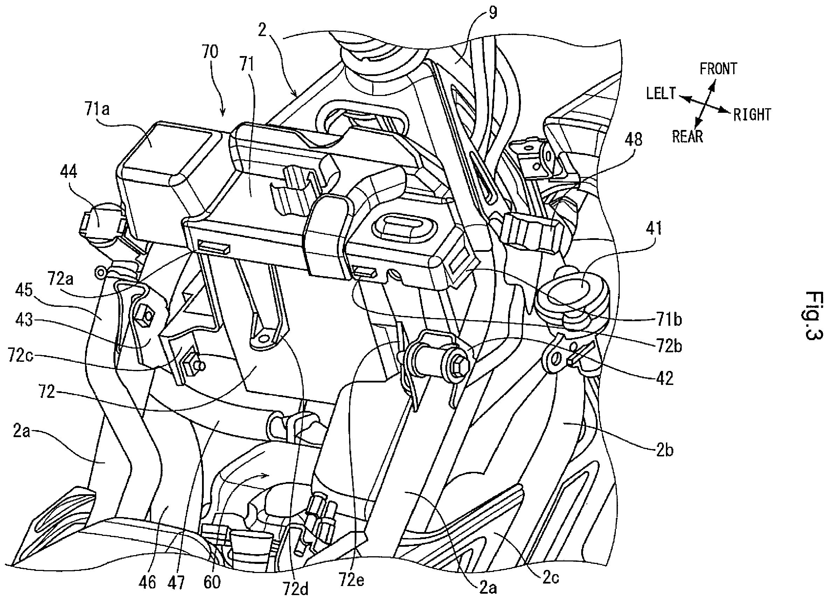

Fig. 3 is an enlarged perspective view showing a configuration of the battery case 70 according to the present embodiment. The upper main frames 2a and the lower main frames 2b are formed into a shape extending rearward and downward while spreading outward in the vehicle width direction from the head pipe 9, and subsequently extending rearward with a lateral interval narrowed. The battery case 70 is formed into an approximately trapezoid in a plan view of the vehicle body so as to be stored in a range from the rear portion of the head pipe 9 to a portion with the lateral interval of the upper and lower main frames 2a, 2b maximized. The battery case 70 formed of synthetic resin or the like has a lower case portion 72 storing the on-vehicle battery or the like, and a cover portion 71 covering the upper portion of the case portion 72.

An outer shape of the cover portion 71 is formed slightly larger than an opening of the case portion 72, and is configured to maintain mutual engagement by engagement claws 72a, 72b or the like provided to a side of the case portion 72 by covering to overlap in the vertical direction and also to remove the cover portion 71 by grasping and lifting up a finger grip portion 71b. A bulged portion 71a bulged upward in order to cover the electric components is formed on the left side of the cover portion 71 in the vehicle width direction.

A right supporting portion 42 and a left supporting portion 32 for supporting the battery case 70 are respectively fixed to the right and left upper main frames 2a, and the respective supporting portions 42, 43 are configured to support a right stay 72e and a left stay 72c provided integrally with the case portion 72. Also, a rear stay 72d for supporting an auxiliary machine is provided integrally with a back side of the case portion 72.

A radiator cap 41 and a feed water cap 48 of the reservoir tank 50 are disposed on a right side of the battery case 70 in the vehicle width direction. A fuel hose 47 connected to a fuel pump and a cooling water hose 46 of the radiator 13 are disposed in the vicinity of a cylinder head 60 of the engine E, and a connecting clamp 44 and a fuel hose 45 connected to a fuel injection device are arranged outside of the left upper main frame 2a.

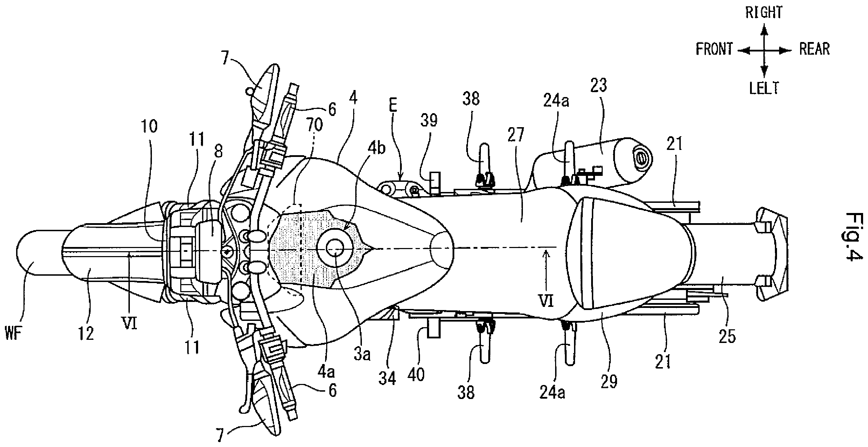

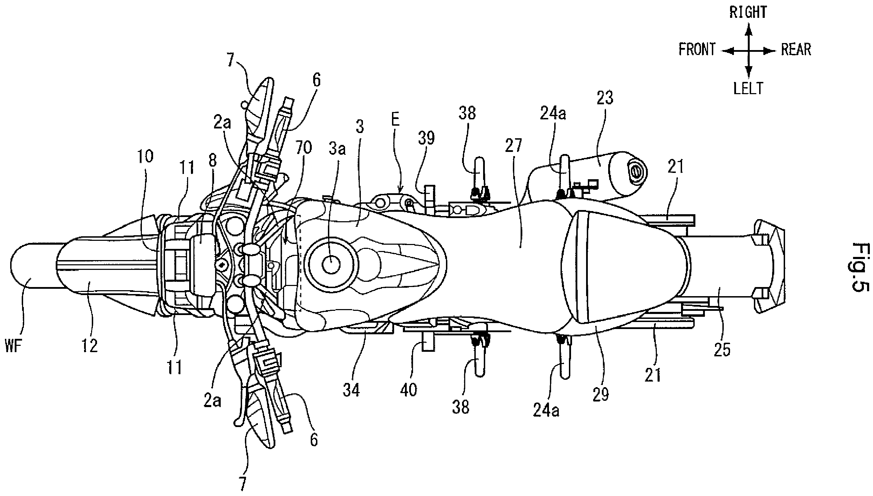

Fig. 4 is a plan view of the motorcycle 1. Fig. 5 is a plan view of the motorcycle 1 with the tank cover 4 removed. The right and left step holders 33 (See Fig. 1) disposed behind a crankcase 34 of the engine E are provided with step bars 38 for allowing the rider to put his/her feet. A rear brake pedal 39 is disposed in the vicinity of the right step bar 38, and a shift pedal 40 is disposed in the vicinity of the left step bar 38. Openable and closable step bars 24a are attached to the tandem step holders 24 (see Fig. 1) fixed to the lower rear frames 32b.

As has been previously described, the upper sides of the fuel tank 3 and the battery case 70 are covered with the tank cover 4 as the exterior component. A detachable maintenance lid 4a (a dotted portion) is provided in a position nearer the vehicle body front side of the tank cover 4 and in the center in the vehicle width direction. A through hole 4b for exposing a fuel filler cap 3a of the fuel tank 3 to the upper side is formed in the maintenance lid 4a. Since the battery case 70 is positioned below the maintenance lid 4a, easy access to the battery case 70 can be achieved by removing the maintenance lid 4a.

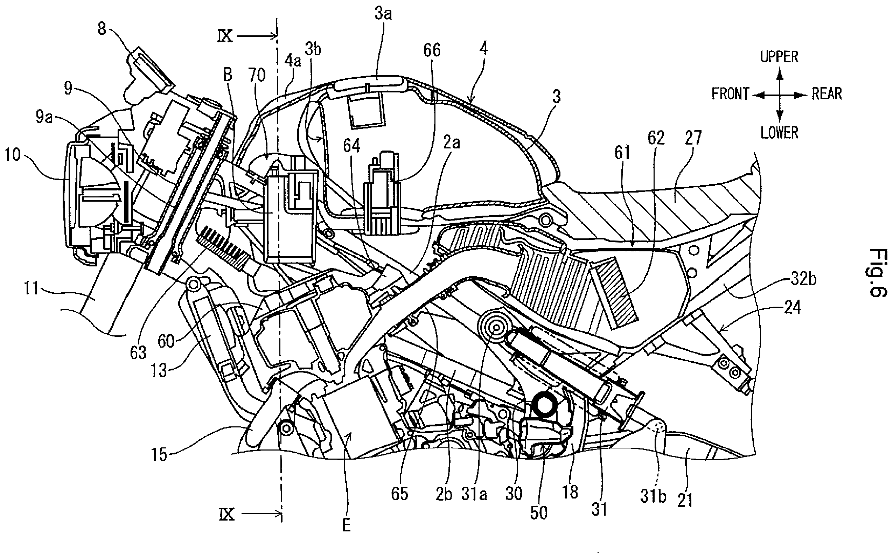

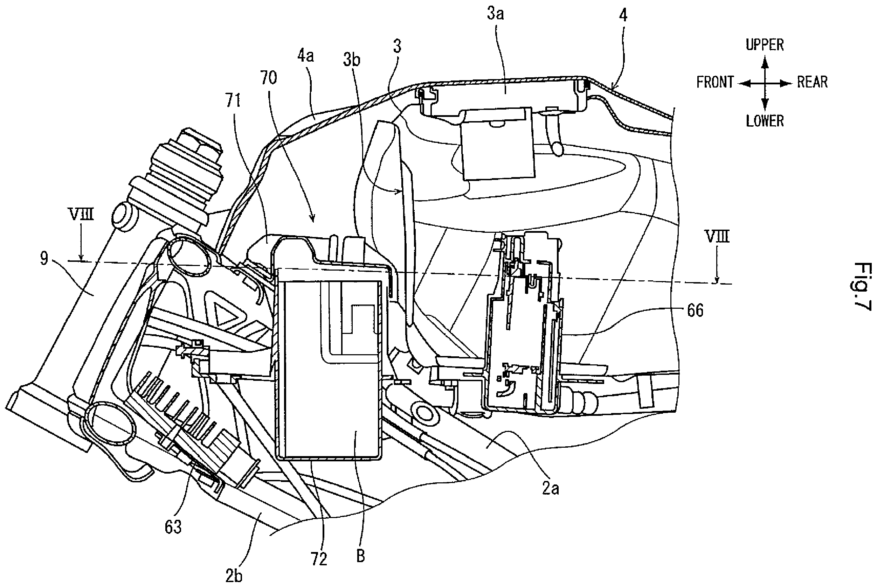

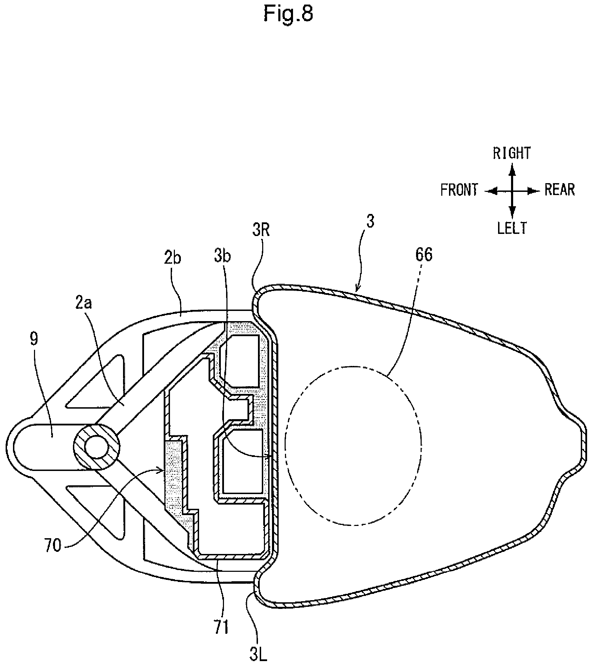

Fig. 6 is a cross-sectional view taken along line VI-VI in Fig. 4. Fig. 7 is a partially enlarged view of Fig. 6, and Fig. 8 is a cross-sectional view taken along line VIII-VIII in Fig. 7.

The head pipe 9 rotatably supports a steering stem 9a as a pivot shaft of the front forks 11. The radiator 13 is disposed in front of the cylinder head 60 of the engine E. A heatsink 63 as the electric component is disposed in a position above the radiator 13 and in front of the battery case 70.

Such a layout that an air cleaner box 61 is disposed in a position below the fuel tank 3 and the seat 27 and above the rear cushion unit 31 is applied to the motorcycle 1 according to the present embodiment. Hereupon, outside air passing through an air filter 62 can be more linearly sucked with respect to an intake pipe 65 provided with a fuel injection device 64.

The rear cushion unit 31 has an upper supporting portion 31a journaled to upper ends of the pivot plates 18, and a lower supporting portion 31b journaled to the upper portion of the swing arm 21. Hereupon, the rear cushion unit 31 is disposed to be inclined rearward and downward while becoming approximately parallel to the upper main frames 2a. The air cleaner box 61 is formed into a shape extending in the longitudinal direction of the vehicle body in order to fill a space between a bottom portion of the fuel tank 3 and the rear cushion unit 31, and the space is effectively utilized. The cooling water reservoir tank 50 is disposed between the right and left pivot plates 18 and below the connector pipe 30.

A fuel pump 66 for forcibly feeding fuel to the fuel injection device 64 is disposed on the bottom nearer the front side of the fuel tank 3. A bottom plate of the fuel tank 3 for supporting the fuel pump 66 is disposed upright in a substantially perpendicular direction prior to the battery case 70, and configures a recessed portion 3b arranged adjacent to a rear surface of the battery case 70.

As shown in Fig. 8, the battery case 70 formed into the approximately trapezoid in the plan view of the vehicle body is arranged to be stored in the recessed portion 3b. Hereupon, the battery case 70 can be arranged between the head pipe 9 and the fuel tank 3 while suppressing a reduction in capacity of the fuel tank to the minimum. And, the battery case 70 can be arranged nearer the front side of the vehicle body without extending a distance from the head pipe 9 to the rear end of the fuel tank 3, and a load ratio of the front wheel can be increased. Further, the right side and left side of the battery case 70 can be also protected by front overhung portions 3L, 3R formed outside of the recessed portion 3b in the vehicle width direction.

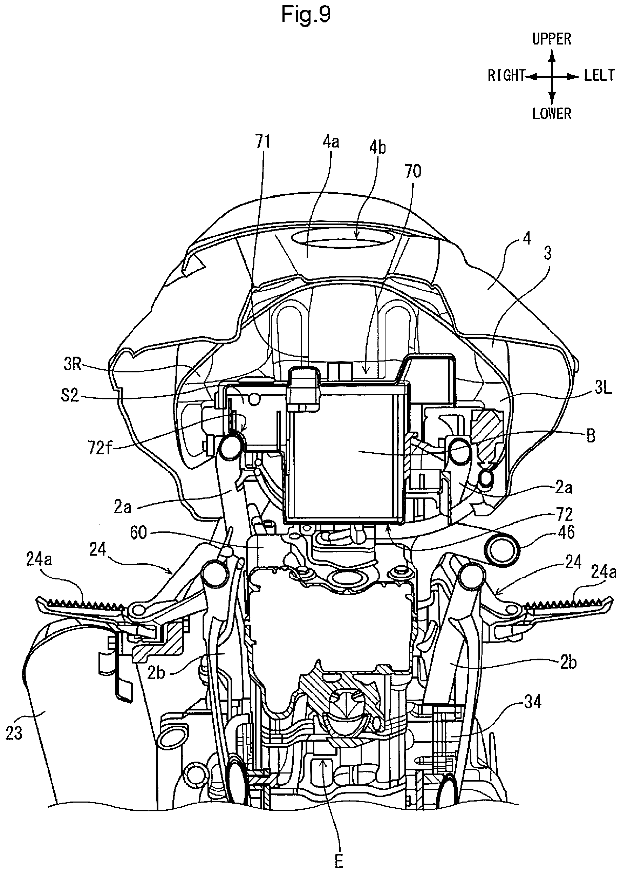

Fig. 9 is a cross-sectional view taken along line IX-IX in Fig. 6. In addition to the battery B, electric components S1, S2 are stored in the case portion 72 of the battery case 70. The battery B is disposed above the cylinder head 60 and in the center in the vehicle width direction, and mass centralization can be achieved. A recessed portion curved according to a shape of the upper main frames 2a is formed in the bottom portion of the right end of the case portion 72 in the vehicle width direction. Hereupon, the case portion 72 can be stored in a predetermined position without increasing the stay while ensuring the capacity of the case portion 72.

With the above-described configuration, according to the battery case 70 of the present embodiment, since the battery case 70 is positioned between the head pipe 9 and the fuel tank 3, and the fuel tank 3 and the battery case 70 are disposed to overlap with each other by being stored in the recessed portion 3b formed in the front portion of the fuel tank 3 in the center in the vehicle width direction, the battery case 70 can be arranged between the head pipe 9 and the fuel tank 3 while suppressing the reduction in the capacity of the fuel tank to the minimum. Hereupon, the battery case 70 can be arranged nearer the front side of the vehicle body without extending the distance from the head pipe 9 to the rear end of the fuel tank 3, and the load ratio of the front wheel can be increased.

The saddled vehicle is not limited to the motorcycle, and can be a saddled three-/four-wheeled vehicle.

### REFERENCE SIGNS LIST

1...motorcycle (saddled vehicle), 2...vehicle body frame, 2a...upper main frame (main frame), 3...fuel tank, 3a...fuel filler cap, 3b...recessed portion, 4...tank cover, 4a...maintenance lid, 9...head pipe, 70...battery case, 71...cover portion, 72...case portion, B...battery, S1...electric component, S2...electric component

## Claims

1. A saddled vehicle (1) comprising
a head pipe (9),
a fuel tank (3),
a pair of right and left main frames (2a) extending rearward and downward from the head pipe (9) and the fuel tank (3) positioned behind the head pipe (9) and above the main frames (2a),
a battery case (70), in which at least a battery (B) is stored and which is positioned between the head pipe (9) and the fuel tank (3), and
a tank cover (4) for covering from above the whole of the fuel tank (3) and the battery case (70), wherein
the fuel tank (3) and the battery case (70) are disposed to partially overlap with each other in a side view of a vehicle body, and
a rear portion of the battery case (70) is stored in a recessed portion (3b) formed in a front portion of the fuel tank (3) in the center in a vehicle width direction, **characterized by**
a maintenance lid (4a) formed with a through hole (4b) for exposing a fuel filler cap (3a) of the fuel tank (3) to an upper side of the vehicle body is detachably provided to the tank cover (4), wherein
the battery case (70) is disposed below the maintenance lid (4a).

2. The saddled vehicle (1) according to claim 1, wherein
the battery case (70) has a case portion (72) for storing the battery (B), and a cover portion (71) for covering an upper opening of the case portion (72), and
the case portion (72) and the cover portion (71) partially overlap with each other in the side view of the vehicle body.

3. The saddled vehicle (1) according to claim 1, wherein
the main frames (2a) are formed into a shape extending rearward and downward from the head pipe (9) while spreading outward in the vehicle width direction, and subsequently extending rearward while a lateral interval is narrowed, and
the battery case (70) is formed into an approximately trapezoid in a plan view of the vehicle body in order to be stored in a range from a rear portion of the head pipe (9) to a portion with the lateral interval of the main frames (2a) maximized.

## Patentansprüche

1. Fahrzeug vom Satteltyp (1) aufweisend
ein Kopfrohr (9),
einen Kraftstofftank (3),
ein Paar aus rechtem und linkem Hauptrahmen (2a), die sich
von dem Kopfrohr (9) nach hinten und nach unten erstrecken, und wobei der Kraftstofftank (3) hinter dem Kopfrohr (9) und oberhalb der Hauptrahmen (2a) angeordnet ist,
ein Batteriegehäuse (70), in dem mindestens eine Batterie (B) untergebracht ist und das zwischen dem Kopfrohr (9) und dem Kraftstofftank (3) angeordnet ist, und
eine Tankabdeckung (4) zur oberen Abdeckung des gesamten Kraftstofftanks (3) und des Batteriegehäuses (70), wobei
der Kraftstofftank (3) und das Batteriegehäuse (70) so angeordnet sind, dass sie einander in einer Fahrzeugkarosserie- Seitenansicht teilweise überlappen, und
ein rückwärtiger Teil des Batteriegehäuses (70) in einem Ausnehmungsbereich (3b) untergebracht ist, der in einem vorderen Teil des Kraftstofftanks (3) in der Mitte in einer Fahrzeugbreitenrichtung ausgebildet ist,
**dadurch gekennzeichnet, dass**
an der Tankabdeckung (4) ein mit einem Durchgangsloch (4b) versehener Wartungsdeckel (4a) zur Freigabe eines Tankdeckels (3a) des Kraftstofftanks (3) zu einer Oberseite der Fahrzeugkarosserie hin lösbar vorgesehen ist, wobei
sich das Batteriegehäuse (70) unterhalb des Wartungsdeckels (4a) befindet.

2. Fahrzeug vom Satteltyp (1) nach Anspruch 1, wobei
das Batteriegehäuse (70) zur Aufnahme der Batterie (B) einen Gehäuseabschnitt (72) und zur Abdeckung einer oberen Öffnung des Gehäuseabschnitts (72) einen Abdeckungsabschnitt (71) aufweist, und
sich Gehäuseabschnitt (72) und Abdeckungsabschnitt (71) in der Fahrzeugkarosserie-Seitenansicht teilweise überlappen.

3. Fahrzeug vom Satteltyp (1) nach Anspruch 1, wobei
die Hauptrahmen (2a) in einer Form ausgebildet sind, die sich von dem Kopfrohr (9) nach hinten und nach unten erstreckt, während sie sich in der Fahrzeugbreitenrichtung nach außen spreizt, und sich anschließend nach hinten erstreckt, während ein seitlicher Abstand verengt wird, und
das Batteriegehäuse (70) in einer Draufsicht auf die Fahrzeugkarosserie annähernd trapezförmig ausgebildet ist, um in einem Bereich von einem hinteren Abschnitt des Kopfrohrs (9) bis zu einem Abschnitt mit maximalem seitlichen Abstand der Hauptrahmen (2a) gelagert zu werden.

## Revendications

1. Véhicule à selle (1) comprenant :
une tubulure de refoulement (9),
un réservoir de carburant (3),
une paire de bâtis principaux droit et gauche (2a) s'étendant vers l'arrière et vers le bas à partir de la tubulure de refoulement (9) et du réservoir de carburant (3) positionné derrière la tubulure de refoulement (9) et au-dessus des bâtis principaux (2a),
un boîtier de batterie (70) dans lequel au moins une batterie (B) est stockée et qui est positionné entre la tubulure de refoulement (9) et le réservoir de carburant (3), et
un couvercle de réservoir (4) pour couvrir, depuis le dessus, l'ensemble du réservoir de carburant (3) et du boîtier de batterie (70), dans lequel :
le réservoir de carburant (3) et le boîtier de batterie (70) sont disposés pour se chevaucher partiellement sur une vue latérale d'un corps de véhicule, et
une partie arrière du boîtier de batterie (70) est stockée dans une partie évidée (3b) formée dans une partie avant du réservoir de carburant (3) dans le centre dans le sens de la largeur du véhicule, **caractérisé par** :
un couvercle d'entretien (4a) formé avec un trou débouchant (4b) pour exposer un capuchon de dispositif de remplissage de carburant (3a) du réservoir de carburant (3) sur un côté supérieur du corps de véhicule, est prévu de manière détachable sur le couvercle de réservoir (4), dans lequel :
le boîtier de batterie (70) est disposé sous le couvercle d'entretien (4a).

2. Véhicule à selle (1) selon la revendication 1, dans lequel :
le boîtier de batterie (70) a une partie de boîtier (72) pour stocker la batterie (B), et une partie de couvercle (71) pour recouvrir une ouverture supérieure de la partie de boîtier (72), et
la partie de boîtier (72) et la partie de couvercle (71) se chevauchent partiellement sur la vue latérale du corps de véhicule.

3. Véhicule à selle (1) selon la revendication 1, dans lequel :
les bâtis principaux (2a) sont formés dans une forme s'étendant vers l'arrière et vers le bas à partir de la tubulure de refoulement (9) tout en s'étalant vers l'extérieur dans le sens de la largeur du véhicule, et en s'étendant ensuite vers l'arrière alors qu'un intervalle latéral est rétréci, et
le boîtier de batterie (70) est formé approximativement en forme de trapèze sur une vue en plan du corps de véhicule afin d'être stocké dans une plage allant d'une partie arrière de la tubulure de refoulement (9) jusqu'à une partie avec l'intervalle latéral des bâtis principaux (2a), maximisé.
